# EUROPEAN PATENT SPECIFICATION

(11) **EP 1 577 073 B1**
(45) Date of publication and mention of the grant of the patent: **08.04.2009**
(21) Application number: 05075363.1
(22) Date of filing: 14.02.2005
(51) Int. Cl.: B29C 45/56, B29C 45/14, E04C 5/06

(54) **Method for manufacturing an elongate reinforced plastic construction part**
Verfahren zur Herstellung eines langgestreckten verstärkten Kunststoffformkörpers
Méthode pour fabriquer une pièce allongée en matière plastique renforcée

(30) Priority: 18.02.2004 NL 1025510
(43) Date of publication of application: 21.09.2005
(73) Proprietor: Lankhorst Recycling Products B.V., 8607 AD Sneek (NL)
(72) Inventor: van Belkom, Arnoldus, 8843 KJ Spannum (NL); Koops, Eric Lambertus, 8525 GL Langweer (NL)
(74) Representative: Winckels, Johannes Hubertus F.

(56) References cited:
- EP-A- 0 664 204
- WO-A-94/12902
- DE-A- 2 910 227
- DE-A- 19 641 978
- DE-U- 20 105 761
- DE-U- 20 108 475
- DE-U- 29 901 159
- GB-A- 899 282
- GB-A- 1 433 955
- US-A- 6 159 402
- US-A1- 2002 190 430
- US-A1- 2004 062 943
- US-B1- 6 244 014
- PATENT ABSTRACTS OF JAPAN vol. 0050, no. 76 (M-069), 20 May 1981 (1981-05-20) -& JP 56 024140 A (MITSUI PETROCHEM IND LTD), 7 March 1981 (1981-03-07)
- PATENT ABSTRACTS OF JAPAN vol. 1999, no. 04, 30 April 1999 (1999-04-30) -& JP 11 019972 A (SATO SEIKI:KK), 26 January 1999 (1999-01-26)
- PATENT ABSTRACTS OF JAPAN vol. 1999, no. 09, 30 July 1999 (1999-07-30) & JP 11 091457 A (YAZAKI CORP; SHIGERU CO LTD), 6 April 1999 (1999-04-06) -& DATABASE WPI Week 199924 Derwent Publications Ltd., London, GB; AN 1999-282715 XP002301798 & JP 11 091457 A 6 April 1999 (1999-04-06)
- PATENT ABSTRACTS OF JAPAN vol. 2000, no. 08, 6 October 2000 (2000-10-06) & JP 2000 141403 A (TOKAI KOGYO CO LTD), 23 May 2000 (2000-05-23)
- PATENT ABSTRACTS OF JAPAN vol. 017, no. 635 (M-1514), 25 November 1993 (1993-11-25) & JP 05 200893 A (TOKAI CHEM IND LTD), 10 August 1993 (1993-08-10)
- PATENT ABSTRACTS OF JAPAN vol. 017, no. 595 (M-1503), 29 October 1993 (1993-10-29) & JP 05 177659 A (NIPPON PETROCHEM CO LTD), 20 July 1993 (1993-07-20)
- PATENT ABSTRACTS OF JAPAN vol. 012, no. 201 (M-707), 10 June 1988 (1988-06-10) & JP 63 005912 A (MITSUBISHI PLASTICS IND LTD), 11 January 1988 (1988-01-11)

## Description

The invention relates to a method and injection molding apparatus for manufacturing an elongated reinforced plastic construction part. The invention further relates to a reinforced plastic construction part manufactured with such an injection molding apparatus.

Such a method and injection molding apparatus are known from US patent publication 6,244,014 B1. According to the technique known from US 6,244,014 B1, a cylindrical plastic construction part is manufactured, which construction part is provided with a number of steel reinforcing bars positioned parallel relative to each other. The reinforcing bars have been fixed relative to each other in advance by a connecting structure provided between the bars, which consists of a helically bent bar.

A drawback of the technique known from US 6,244,014 B1 is that it is laborious to ensure that the reinforcing bars are positioned in the manufactured construction part in a desired manner. For instance, after the bars are interconnected by the connecting structure, special spacing pins are welded to the bars before the bars are placed in the mold. In the mold, these pins keep the reinforcing bars at a desired distance from the mold walls. After taking the molded and cooled construction part from the mold, the free end parts of the spacing pins are ground out. The excavations thus created in the surface of the construction part then need to be filled in a sealing manner.

A further drawback of the technique known from US 6,244,014 B1 is that this technique does not provide a solution for positioning bars which are provided parallel in the mold without the interconnecting structure.

Further, a method and apparatus for injection molding are known from "Patent Abstracts of Japan", volume 0050, number 76 (M-069) and the corresponding patent application JP-A-56024140. In this technique known per se, liquid plastic material is injected into a mold in which an elongated reinforcing element is laterally supported by a first supporting element and is supported at an end by a second supporting element. Due to the pressure of the injected plastic material, the first supporting element is moved towards the second supporting element, against the force of a spring provided between the first and second supporting element. Then, due to the pressure, the second supporting element is pressed away from the reinforcing element, against the force of a second spring. In this manner, a reinforcing element completely surrounded by plastic is obtained.

A drawback of the technique known from "Patent Abstracts of Japan", volume 0050, number 76 (M-069) and the corresponding patent application JP-A-56024140 is that, during the manufacture of the reinforced construction part, undesired deformations of the construction part are created, such as for instance cracks. These undesired deformations occur because temperature changes occur during the manufacture, so that the plastic material and the reinforcing element deform differently. The deformations are usually more serious as the length of the construction parts to be manufactured is greater.

It is an object of the invention to provide a technique with which reinforcing bars can be positioned in manufactured construction parts in a desired manner, while the creation of deformations during the manufacture is prevented.

For this purpose, according to the invention, a method according to claim 1 is provided.

The at least one reinforcing bar has a non-smooth surface. As a result, during the manufacturing process, forces are better transferred between the plastic material and the at least one reinforcing bar. This improves the bonding between the plastic material and the at least one reinforcing bar so that, for instance with temperature changes, such as during the cooling stage, undesired deformations, such as cracks of the plastic material, can be prevented.

In addition, the technique according to the invention requires few operations to manufacture construction parts in which reinforcing bars are positioned in a desired manner. This is because providing the at least one reinforcing bar through the at least one passage of the movable wall is a simple operation. Further, despite the great forces caused by the injection molding, the movable wall accurately keeps the at least one reinforcing bar in a desired position during the injection of the plastic material, without the movable wall being injection-molded so as to be integrated in the construction part to be manufactured.

Specific embodiments of the inventions are set forth in the subclaims.

In the following, the invention is explained in more detail with reference to the Figures in the appended drawing, in which:
Fig. 1 diagrammatically shows, in perspective, an example of an embodiment of an injection molding apparatus according to the invention; and
Fig. 2 diagrammatically shows, in perspective, an example of an elongated reinforced plastic construction part manufactured by means of a method according to the invention.

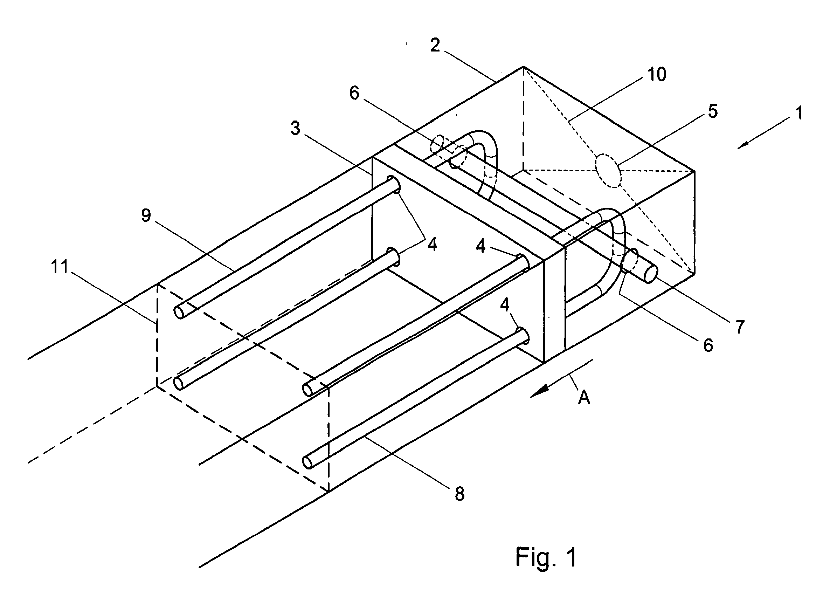

Reference is first made to Fig. 1. This Figure shows an injection molding apparatus 1 for manufacturing an elongated reinforced plastic construction part. The apparatus 1 comprises an elongated injection mold 2 which has a rectangular cross section in the example shown. However, different shapes of cross sections are also possible. The mold is provided with an injection opening 5, which is, in this example, located in an end wall at an end of the elongated mold. For the purpose of opening and closing the mold, the mold 2 may comprise one or more detachable walls.

The injection molding apparatus 1 further comprises a wall 3 which is located in the interior of the mold 2 in the situation shown. The wall 3 has a rectangular shape corresponding with the interior rectangular cross-sectional shape of the mold 2 and is substantially transverse to the longitudinal direction of the mold 2. The wall 3 is provided with at least one passage 4. In the example shown, the wall 3 is provided with four passages 4, namely one near each corner of the wall 3. The wall 3 is movable relative to the mold 2 in the longitudinal direction of the mold 2.

The mold 2 is further provided with two openings 6, with the one opening being located in one of the longitudinal walls of the mold and with the other opening being located in an opposite longitudinal wall. Through these two openings 6, a bar-shaped body 7 extends such that the body 7 projects through the mold 2. The body 7 is located between the movable wall 3 and the end wall 10.

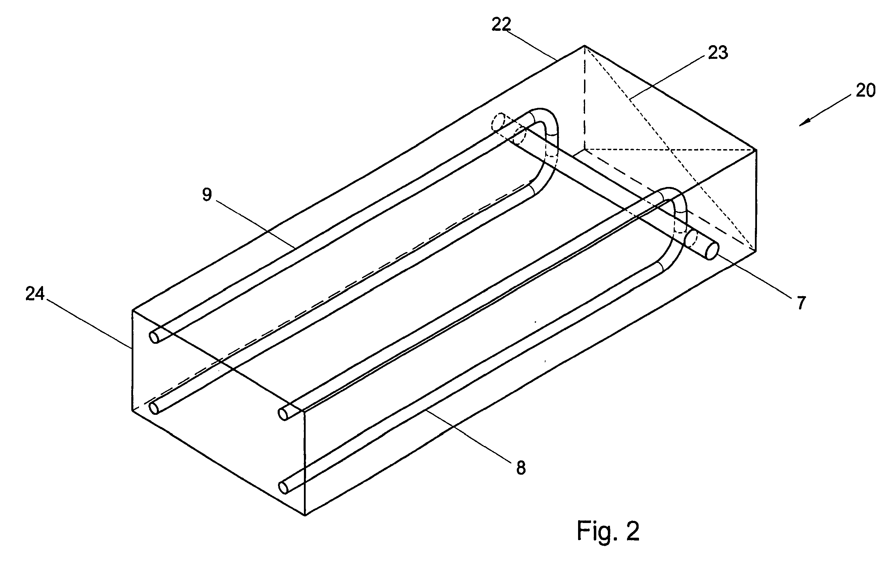

On the basis of the above-mentioned injection molding apparatus 1, now a method is described for manufacturing a construction part according to the invention. Fig. 2 shows such a construction part 20 which is substantially made from a suitable plastic material 22. The plastic material may, for instance, comprise material which is suitable to absorb tensions occurring during temperature changes, such as for instance LDPE (Low Density Polyethylene). The plastic material may comprise recycled plastic.

Figs. 1 and 2 shows two substantially U-shaped reinforcing bars or elements 8 and 9. The reinforcing bars 8 and 9 may be from various materials, for instance from steel or from material comprising glass fiber cables. The choice of material may, for instance, depend on electrical conducting properties of the material which are desired or undesired for different uses of construction parts. According to the method, the reinforcing bars 8 and 9 are placed in the mold 2 parallel to the longitudinal direction of the mold 2 and provided through the passages 4 of the barrier element 3. Here, the legs of the U-shaped reinforcing bars 8 and 9 are substantially parallel to the longitudinal direction of the mold 2. In the example shown, for each of the two reinforcing bars 8 and 9, the two legs of the U-shape are provided through two passages 4.

The U-shaped reinforcing bars 8 and 9 have been placed in the mold 2 such that the U-bends are facing the end wall 10 of the mold 2. Here, the legs of the U-shapes of the reinforcing bars 8 and 9 engage around the bar-shaped body 7 projecting through the mold. In the example shown, the body 7 abuts the reinforcing bars on the inside of the U-bends. When an axial force is exerted on the reinforcing bars in a direction away from the end wall 10, the body 7 thus keeps the reinforcing bars axially in place. So, the body 7 is a fixing body for keeping the reinforcing bars axially in place.

In this example, it is further assumed that the legs of the two U-shapes of the two bars 8 and 9 are all equally long and that the free ends of the respective four legs are substantially in one cross-sectional plane 11 of the mold 2.

According to the method, liquid plastic material is injected into the mold 2 through the injection opening 5 in (or near) the end wall 10, while the movable wall 3 forms a barrier for the injected plastic material. During the injection of the plastic material, the movable wall 3 is moved relative to the mold 2 in longitudinal direction of the mold 2, more specifically in a direction away from the end wall 10, i.e. in the direction of arrow A shown in Fig. 1. The wall 3 then moves along the reinforcing bars 8 and 9, while these reinforcing bars extend through the at least one passage of the wall 3. The wall 3 may, for instance, be moved due to the pressure exerted on the wall 3 by the injected plastic material. Alternatively or additionally, the wall 3 may also be moved in a controlled manner by other driving means. The reinforcing bars are free from cross connections and the like at least over a path along which the end wall needs to move.

Under certain conditions, it may be advantageous to match the size of the passages 4 to the cross-sectional dimensions of the bars 8 and 9 such that the passages are largely closed off by the bars extending through them. This because, the more the passages 4 are closed off by the bars 8 and 9, the less liquid plastic material can leak away via the passages 4 through the wall 3 during injection molding and the greater the pressure exerted on the wall 3 by the plastic material is.

As a result of the injection of the plastic material into the mold 2, forces are exerted on the bars 8 and 9, whose resultant generally has a component in the direction of arrow A. During the occurrence of such forces, the fixing body 7 keeps the reinforcing bars axially in place, as mentioned hereinabove.

As soon as the movable wall 3 has reached an axial position in the mold 2 that corresponds with the desired length of the construction part to be manufactured, the wall 3 is stopped. The stopping may, for instance, take place in that the wall 3 reaches another end wall of the mold 2 opposite the end wall 3, or in that the wall 3 reaches a different suitable stop provided in the mold, against which the wall 3 can support. The stopping may, for instance, also take place by means of stopping the driving means that move the wall 3. Around the moment when the wall 3 is stopped, the injection of the plastic material into the mold 2 can also be stopped. Then, the wall 3 is in the proximity of the free ends of the bars 8 and 9.

Then, the liquid plastic material is cooled, so that the plastic material is cured. After curing, a construction part, such as for instance the construction part 20 shown in Fig. 2, can be obtained from the mold 2. By way of post-treatment, parts of the fixing body 7 projecting from the construction part 20 can be removed if necessary.

The fixing body 7 is preferably manufactured from a material which does not deform much upon exposure to the high temperatures of the injected plastic material 22 which occur during injection molding, so that the function of axially retaining the reinforcing bars is preserved as well as possible. To prevent melting of the fixing body, it is advantageous if the fixing body 7 is made from a different (plastic) material than the injected plastic material. If the fixing body melts slightly on its outside only, this is less problematic or it may even be advantageous because this promotes a good bonding between the fixing body 7 and the plastic material 22 during cooling.

Optionally, the method may provide an additional step, involving the fixing body 7 being removed from the interior of the mold 2 after the liquid plastic material 22 has been injected into the mold 2. An advantage of this is that, thus, a construction part can be manufactured, such as the construction part 20 shown in Fig. 2, but without the fixing body 7 being injection-molded so as to be integrated in the construction part. This additional method step may, for instance, be carried out around the moment when the injection of the plastic material is stopped. The space in the mold 2 left vacant by the removal of the fixing body 7 is automatically filled by the plastic material still liquid at that time. In this type of method, the fixing body 7 may, for instance, be from steel or a different strong material which does not melt at the high temperatures of the injected plastic material which occur during injection molding.

Upon removal of the fixing body 7 from the interior of the mold 2, the openings 6 in the walls of the mold 2 can be closed off in various suitable manners to prevent the liquid plastic material from flowing out of the mold. In the situation shown in Fig. 1, for instance, the bar-shaped body 7 can be pulled by the one, first end through the one, first opening 6 out of the mold 2, while, as soon as the other, second end is in the other, second opening 6, this second opening 6 is covered, for instance by an exterior lid or the like. Then, the body 7 can thus be pulled out of the mold 2 further until the second end of the body 7 reaches the first opening 6, which first opening 6 is then, for instance, covered by the end face of the second end of the body 7. As soon as the plastic material 22 has cured sufficiently, the body 7 can be removed from the mold 2.

The reinforcing bars 8 and 9 have non-smooth surfaces. This has the advantage of an improved transfer of forces between the plastic material 22 and the reinforcing bars 8 and 9. A good force transfer is desired because exterior loads which can be exerted on the construction parts during use of the construction parts generally need to be transferred to the reinforcing bars. But a good force transfer may also be desired during the manufacturing process of the construction parts. This is to improve the bonding between the plastic material and the reinforcing bars so that, for instance during temperature changes such as during the cooling stage, undesired deformations, such as cracks of the plastic material, are prevented.

Examples of advantageous non-smooth surfaces of the reinforcing bars are profiled surfaces, roughened surfaces or surfaces provided with grain material. Profiled surfaces may, for instance, be provided with corrugations, grooves or with other types of elevations and recesses. Roughened surfaces may, for instance, be sanded surfaces or surfaces brushed with (wire) brushes. Surfaces provided with grain material have been found to be advantageous for, for instance, glass-fiber reinforcing bars.

In order to prevent liquid plastic material from leaking away through the passages 4 during injection molding, as said, the size of the passages 4 can be matched to the cross-sectional dimensions of the bars 8 and 9 such that the passages 4 are largely closed off by the bars extending through them. This matching can take into account the resistance the wall 3 experiences during its movement as a result of the frictional forces between the wall 3 and the bars 8 and 9 occurring in the passages 4. This is because, the greater this resistance is, the greater the pressure of the liquid plastic material needs to be to move the wall 3. And the greater this pressure is, the greater the chance of the plastic material leaking away through the passages 4.

Further, the length of the passages 4 can be chosen so as to be sufficiently great to prevent liquid plastic material from leaking away through the passages 4 during injection molding. A further advantage of a sufficiently great length of the passages 4 is that thus, slanting of the movable wall 3 is prevented. Also in the choice of the length of the passages 4, the resistance experienced by the wall 3 during its movement can again be taken into account.

In practice, various dimensions of the passages 4 have been found to be possible for various types of non-smooth surfaces of the reinforcing bars, with which the method can be carried out in a reliable manner under various conditions.

In the construction part 20 (see Fig. 2), the U-bends of the reinforcing bars 8 and 9 are facing a first end face 23 at a first end of the construction part 20, and the free ends of their legs are facing a second end face 24 at a second end of the construction part 20. The reinforcing bars 8 and 9 are at some distance from the first end face 23 and from the longitudinal surfaces of the construction part 20. This is advantageous if it is desired that the construction part 20 has no exposed reinforcing parts, for instance to prevent corrosion of reinforcing parts susceptible to corrosion, or for instance to prevent objects bumping against the construction part from hitting the reinforcing parts. In the example shown, the second end face 24 coincides with the cross-sectional plane 11 (see Fig. 1) in which the free ends of the legs of the reinforcing bars 8 and 9 are located, so that the reinforcing bars 8 and 9 are exposed near the end face 24. If this is not desired, the above-described method can be adjusted in various manners. For instance, the movable wall 3 can be stopped at a somewhat later point in time, i.e. after the movable wall 3 has passed the cross-sectional plane 11. But also, for instance, the tips of the free ends of the reinforcing bars 8 and 9 can be made from a different material than the material of the reinforcing, for instance from a material from which the fixing body 7 is made.

With the above-described method, it is achieved in an efficient manner that the reinforcing bars 8 and 9 are positioned in the manufactured construction part 20 in a desired manner. The method prevents the reinforcing bars 8 and 9 from being pressed out of the desired position due to the high pressures occurring during injection molding. Use of the method can prevent reinforcing parts from becoming exposed to surfaces of the construction part 20.

It is noted that, after the foregoing, various modifications are obvious to a skilled person. For instance, injection molds having various cross-sectional shapes can be used. Also, movable walls of various shapes with passages arranged in various patterns can be used. Further, in the exemplary embodiment of the method described, if desired, a post-treatment operation may be added which involves an end part being sawed off a construction part, which end part comprises the fixing body and the U-bends of the reinforcing bars.

Further, the fixing body may have a different design than shown in the Figures. When single straight reinforcing bars are used, for instance, one or more fixing bodies may be used, which are provided with openings through which the reinforcing bars extend, while the reinforcing bars are provided with a thickened head, a bent end or the like at the end facing the end wall 10. In such uses, for instance, the end wall 10 may be detachable from the mold to allow the reinforcing bars to be placed in the mold.

It is further noted that, with an elongated mold or an elongated construction part, respectively, a mold or construction part, respectively, is meant which has a substantially equal cross section in a longitudinal direction, i.e. the direction of the reinforcing bars. This does not necessarily mean that the other dimensions of the mold or the construction part need to be smaller than the dimension in the longitudinal direction.

These and similar modifications are understood to be within the framework of the invention as defined in the appended claims.

## Claims

1. A method for manufacturing an elongated reinforced plastic construction part (20), wherein
- an elongated injection mold (2) is provided having an end wall (10) and at least one injection opening (5) provided in or near the end wall (10);
- at least one reinforcing bar (8, 9) is placed in the mold (2);
- a movable wall (3) is provided in the interior of the mold (2), which movable wall (3) is provided with at least one passage (4) for axially letting through at least one reinforcing bar (8, 9);
- the at least one reinforcing bar (8, 9) is provided through the at least one passage (4); and
- liquid plastic material (22) is injected into the mold (2);
- during the injection of the plastic material (22), the movable wall (3) is moved relative to the mold (2) from a starting position near the said end wall (10) in longitudinal direction of the mold (2), wherein the movable wall (3) forms a barrier for the injected plastic material (22) and the movable wall (3) moves along the at least one reinforcing bar (8, 9) extending through the at least one passage (4); and
- the plastic material (22) is cooled;
**characterized in that** the at least one reinforcing bar (8, 9) has a non-smooth surface.

2. A method according to claim 1, wherein, for the non-smooth surface of the at least one reinforcing bar (8, 9), a profiled surface is used.

3. A method according to claim 1 or 2, wherein, for the non-smooth surface of the at least one reinforcing bar (8, 9), a roughened surface is used.

4. A method according to any one of the preceding claims, wherein, for the non-smooth surface of the at least one reinforcing bar (8, 9), a surface provided with grain material is used.

5. A method according to any one of the preceding claims, wherein the movable wall (3) is moved as a result of the pressure exerted on the wall (3) by the injected plastic material (22).

6. A method according to any one of the preceding claims, wherein the at least reinforcing bar (8, 9) is kept axially in place by at least one fixing body (7) present in the mold (2).

7. A method according to claim 6, wherein the fixing body (7) is removed from the interior of the mold (2) after the liquid plastic material (22) has been injected into the mold (2).

8. A method according to any one of the preceding claims, wherein at least one U-shaped reinforcing bar (8, 9) is used, wherein the two legs of the U-shape reach through passages in the movable wall (3), and the bottom of the U-shape is located near the said end wall (10).

9. A method according to claim 8, as far as dependent on claims 6 or 7, wherein a bar-shaped fixing body (7) is used and the legs of the U-shaped reinforcing bar (8, 9) engage around the bar-shaped fixing body (7).

## Patentansprüche

1. Verfahren zum Herstellen eines gestreckten, verstärkten Kunststoffbauteils (20), wobei
- eine gestreckte Spritzgießform (2), die eine Endwand (10) und mindestens eine Spritzöffnung (5), die in oder in Nähe der Endwand (10) vorgesehen ist, bereit gestellt wird;
- mindestens ein Verstärkungsstab (8,9) in der Gießform (2) platziert wird;
- eine bewegbare Wand (3) im Inneren der Gießform (2) bereitgestellt wird, wobei die bewegbare Wand (3) mit mindestens einer Passage (4) zum axialen Durchlassen mindestens eines Verstärkungsstabs (8,9) versehen ist;
- der mindestens eine Verstärkungsstab (8,9) durch die mindestens eine Passage (4) bereitgestellt wird; und
- ein flüssiges Kunststoffmaterial (22) in die Gießform (2) gespritzt wird;
- während des Einspritzens des Kunststoffmaterials (22), die bewegbare Wand (3) relativ zu der Gießform (2) von einer Startposition in Nähe der Endwand (10) in longitudinaler Richtung der Gießform (2) bewegt wird, wobei die bewegbare Wand (3) eine Barriere für das eingespritzte Kunststoffmaterial (22) bildet und die bewegbare Wand (3) sich entlang des mindestens einen Verstärkungsstabs (8,9), der sich durch die mindestens eine Passage (4) erstreckt, bewegt; und
- das Kunststoffmaterial (22) gekühlt wird;
**dadurch gekennzeichnet, dass** der mindestens eine Verstärkungsstab (8,9) eine nicht-glatte Oberfläche aufweist.

2. Verfahren nach Anspruch 1, wobei für die nicht-glatte Oberfläche des mindestens einen Verstärkungsstabs (8,9) eine profilierte Oberfläche verwendet wird.

3. Verfahren nach Anspruch 1 oder 2, wobei für die nicht-glatte Oberfläche des mindestens einen Verstärkungsstabs (8,9) eine aufgeraute Oberfläche verwendet wird.

4. Verfahren nach einem der vorstehenden Ansprüche, wobei für die nicht-glatte Oberfläche des mindestens einen Verstärkungsstabs (8,9) eine Oberfläche, die mit einem körnigen Material versehen ist, verwendet wird.

5. Verfahren nach einem der vorstehenden Ansprüche, wobei die bewegbare Wand (3) als ein Ergebnis des Drucks, der auf die Wand (3) von dem eingespritzten Kunststoffmaterial (22) ausgeübt wird, bewegt wird.

6. Verfahren nach einem der vorstehenden Ansprüche, wobei der mindestens eine Verstärkungsstab (8,9) von mindestens einem Befestigungskörper (7), der in der Gießform (2) vorhanden ist, axial am Platz gehalten wird.

7. Verfahren nach Anspruch 6, wobei der Befestigungskörper (7) aus dem Inneren der Gießform (2) entfernt wird, nachdem das flüssige Kunststoffmaterial (22) in die Gießform (2) gespritzt wurde.

8. Verfahren nach einem der vorstehenden Ansprüche, wobei mindestens ein U-förmiger Verstärkungsstab (8,9) verwendet wird, wobei die beiden Beine der U-Form durch Passagen in der bewegbaren Wand (3) hindurchreichen, und sich der Boden der U-Form in Nähe der Endwand (10) befindet.

9. Verfahren nach Anspruch 8, soweit abhängig von Ansprüchen 6 oder 7, wobei ein stabförmiger Befestigungskörper (7) verwendet wird und die Beine des U-förmigen Verstärkungsstabs (8,9) den stabförmigen Befestigungskörper (7) umgreifen.

## Revendications

1. Méthode pour fabriquer une pièce allongée en matière plastique renforcée (20), dans laquelle
- il est prévu un moule à injection oblong (2) présentant une paroi terminale (10) et au moins un orifice d'injection (5) ménagé dans ou près de la paroi terminale (10) ;
- au moins une barre de renfort (8, 9) est placée à l'intérieur du moule (2) ;
- une paroi mobile (3) est prévue à l'intérieur du moule (2), ladite paroi mobile (3) présentant au moins un passage (4) pour autoriser le passage axial d'au moins une barre de renfort (8, 9) ;
- la ou les barres de renfort (8, 9) passent par le ou les passages (4) ; et
- une matière plastique liquide (22) est injectée dans le moule (2) ;
- durant l'injection de la matière plastique (22), la paroi mobile (3) est déplacée par rapport au moule (2) dans la direction longitudinale dudit moule (2) depuis une position de départ située près de ladite paroi terminale (10), la paroi mobile (3) formant une barrière pour la matière plastique injectée (22) et se déplaçant le long de la ou des barres de renfort (8, 9) qui traversent le ou les passages (4) ; et
- la matière plastique (22) est refroidie ;
**caractérisée en ce que** la ou les barres de renfort (8, 9) présentent une surface non lisse.

2. Méthode selon la revendication 1, **caractérisée en ce qu'**il est employé comme surface non lisse de la ou des barres de renfort (8, 9) une surface profilée.

3. Méthode selon la revendication 1 ou la revendication 2, **caractérisée en ce qu'**il est employé comme surface non lisse de la ou des barres de renfort (8, 9) une surface rendue rugueuse.

4. Méthode selon l'une quelconque des revendications précédentes, **caractérisée en ce qu'**il est employé comme surface non lisse de la ou des barres de renfort (8, 9) une surface pourvue d'un matériau granuleux.

5. Méthode selon l'une quelconque des revendications précédentes, **caractérisée en ce que** la paroi mobile (3) est déplacée sous l'effet de la pression exercée sur la paroi (3) par la matière plastique injectée (22).

6. Méthode selon l'une quelconque des revendications précédentes, **caractérisée en ce que** la ou les barres de renfort (8, 9) sont maintenues axialement en position par au moins un corps d'immobilisation (7) présent dans le moule (2).

7. Méthode selon la revendication 6, **caractérisée en ce que** le corps d'immobilisation (7) est retiré de l'intérieur du moule (2) après injection de la matière plastique liquide (22) dans ledit moule (2).

8. Méthode selon l'une quelconque des revendications précédentes, **caractérisée en ce qu'**il est employé au moins une barre de renfort (8, 9) en forme de U, les deux jambes du U traversant des passages pratiqués dans la paroi mobile (3) tandis que la base du U est située près de ladite paroi terminale (10).

9. Méthode selon la revendication 8 prise en dépendance de la revendication 6 ou de la revendication 7, **caractérisée en ce qu'**il est employé un corps d'immobilisation en forme de barre (7) et **en ce que** les jambes de la barre de renfort en U (8, 9) s'engagent autour du corps d'immobilisation en forme de barre (7).
